# EUROPEAN PATENT APPLICATION

(11) **EP 4 635 907 A1**
(43) Date of publication of application: **22.10.2025**
(21) Application number: 23903948.0
(22) Date of filing: 12.12.2023
(51) Int. Cl.: C01B 3/48, C01B 3/50, C01D 7/00

(54) **METHOD FOR PRODUCTION OF CLEAN HYDROGEN**

(30) Priority: 16.12.2022 KR 20220177485
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: BYUN, Young-Chul, Gwangyang-si, Jeollanam-do 57798 (KR); JANG, Jin-Ho, Seoul 06194 (KR); MIN, Jung-Gi, Gwangyang-si, Jeollanam-do 57790 (KR); RYU, Jong-Geun, Seoul 06194 (KR); KIM, Eun-Ae, Jinju-si, Gyeongsangnam-do 52826 (KR); BAK, Hyun-Su, Gwangyang-si, Jeollanam-do 57810 (KR)
(74) Representative: Pfenning, Meinig & Partner mbB
(86) International application number: PCT/KR2023/020386
(87) International publication number: WO 2024/128745

(57) **Abstract**

The present invention relates to a method for production of clean hydrogen and, more specifically, to a method for production of clean hydrogen comprising: a methane reforming step of converting methane-containing gas into a reformed gas containing hydrogen, CO, and CO2 through a reforming reaction using steam; a step of obtaining a hydrogen and carbon dioxide mixed gas by performing a water-gas shift (WGS) on the reformed gas; a separation step of separating hydrogen and carbon dioxide from the mixed gas; and a step of mixing the separated carbon dioxide with sodium sulfate, ammonia, and water.

## Description

### Technical Field

The present disclosure relates to a method for producing clean hydrogen, and more specifically, to a method for producing clean hydrogen that may economically produce the clean hydrogen using an industrial by-product and may contribute to carbon neutrality by fixing carbon dioxide into carbonate, a mineral.

### Background Art

Recently, with the goal of carbon neutrality established worldwide in relation to climate change, hydrogen (H₂) has been receiving more attention. Thereamong, clean hydrogen refers to hydrogen in which the hydrogen is produced using fossil fuels, but generated carbon dioxide (CO₂) is removed in a manner of capturing or storing the same, and not to be released into the atmosphere, and is selected as one of main means of the carbon neutrality. Accordingly, in order to produce clean hydrogen, CCUS (Carbon Capture, Utilization, and Storage) technology that captures and utilizes CO₂ is required.

Currently, most hydrogen production is carried out through reforming natural gas, which may be mainly comprised of methane, and such a method may be largely divided into methods using steam or oxygen. Currently, most of reforming of the methane uses a steam reforming method, and a main reaction formula is as follows.

C*n*H*m + n*H₂O → (*n + m*/2)H₂ + *nCO* (endothermic reaction, ΔH= 206 kJ/mol)

CO + H₂O → CO₂ + H₂ (exothermic reaction, ΔH= -41 kJ/mol)

A steam reforming sequence of methane is as follows. A sulfur component contained in a natural gas, a raw material, may be removed, and a reformed gas containing hydrogen and carbon monoxide (CO) may be produced through a reforming reactor using steam. The produced reformed gas may increase a hydrogen yield through a water-gas shift (WGS) reaction. Meanwhile, when high-purity hydrogen is required, a purification process such as a pressure swing adsorption (PSA) process may be utilized. As may be seen from the reaction, CO₂ may be generated when hydrogen is produced through the WGS reaction. Accordingly, CO₂ needs to be utilized to produce clean hydrogen.

Meanwhile, baking soda (NaHCO₃) may be used in various fields such as food, feed, leather, medicine, or the like, and may be obtained by one of the representative CCUS technologies that may be produced using CO₂. A basic technology for the production of baking soda may be the Solvay process, which may produce baking soda as a by-product in a process of producing sodium carbonate and calcium chloride from NaCl contained in seawater. In addition to NaCl, baking soda may be produced using Na₂CO₃, NaOH, or the like. In addition, sodium sulfate (Na₂SO₄) may be used. Na₂SO₄ may be produced in large quantities as a by-product of waste generated by industries.

Flue gas desulfurization refers to removal of sulfur (S) components, especially sulfur dioxide (SO₂), in exhaust gases emitted from a steel mill, a thermal power plant, or the like. Along with industrial development, harmful gas or the like such as sulfur oxides (SOₓ) emitted from various factories, thermal power plants, or incinerators cause serious air pollution and cause various diseases such as respiratory diseases, asthma, lung cancer, or the like in the human body. Currently, desulfurization agents used in dry desulfurization may include baking soda (NaHCO₃), activated carbon, calcium hydroxide (Ca(OH)₂), or the like, and, in the case of a desulfurization agent such as baking soda, baking soda may be known to maximize a specific surface area, when sprayed on high-temperature exhaust gas, resulting in excellent adsorption and reaction efficiency. At this time, sodium sulfate (Na₂SO₄) waste may be generated as a by-product of a desulfurization treatment. The generated Na₂SO₄ may be disposed of through landfill. In addition, as the spread of electric vehicles has recently expanded, demand for lithium, a raw material for secondary batteries, is increasing. Main by-products generated during lithium production may be silica (SiO₂) and sodium sulfate (Na₂SO₄). It is expected that an amount of a sodium sulfate by-product to be generated will also increase in line with increasing demand for lithium in the future. Accordingly, development of technology that may recycle sodium sulfate shall be preceded for supply of secondary batteries, but suitable methods are not provided.

Accordingly, when a method for economically producing clean hydrogen using such industrial by-products is developed, it is expected to be widely applied in related fields.

### Summary of Invention

### Technical Problem

An aspect of the present disclosure is to provide a method for producing clean hydrogen that may secure environmentally friendliness and economic feasibility because secondary costs for treatment of industrial by-products are not required, by using sodium sulfate generated as an industrial by-product and carbon dioxide generated through steam reforming of natural gas containing methane, to produce baking soda and gypsum (CaSO₄).

### Solution to Problem

According to an aspect of the present disclosure, a method for producing blue hydrogen may be provided, which includes: an operation of removing sulfur as an impurity; a methane reforming operation of converting a methane-containing gas into a reformed gas containing hydrogen, CO, and CO₂ by a reforming reaction using steam; an acquisition operation of performing a water-gas shift (WGS) on the reformed gas to acquire a mixed gas of the hydrogen and the carbon dioxide; a separation operation of separating the hydrogen and the carbon dioxide from the mixed gas; and a mixing operation of mixing the separated carbon dioxide, sodium sulfate, ammonia, and water.

### Advantageous Effects of Invention

The present disclosure may produce clean hydrogen because carbon dioxide generated from a reforming reaction of natural gas is used, and also may be operated economically by selling baking soda because costs of disposal of waste may be reduced by producing baking soda using waste products containing sodium sulfate, which are by-products. Furthermore, there may be an effect of contributing to carbon neutrality as capture, utilization, and storage (CCUS) technology for carbon dioxide, by stably fixing carbon dioxide as carbonate, a mineral.

### Brief Description of Drawings

FIG. 1 illustrates an example overall process diagram for producing clean hydrogen using methane.
FIG. 2 illustrates results of XRD analysis of baking soda (left) and gypsum (right) produced in a process proposed by an embodiment of the present disclosure.
FIG. 3 is a graph of yield for baking soda according to a water/waste weight ratio and a NH₃/Na⁺ molar ratio.
FIG. 4 is a graph of purity and yield for baking soda according to a NH₃/Na⁺ molar ratio.

### Best Mode for Invention

Hereinafter, a preferred embodiment of the present disclosure will be described with reference to the attached drawings. However, an embodiment of the present disclosure may be modified in various other forms, and the scope of the present disclosure is not limited to an embodiment described below.

According to the present disclosure, a method for producing clean hydrogen may be provided, including a methane reforming operation of converting a methane-containing gas into a reformed gas containing hydrogen, CO, and CO₂ by a reforming reaction using steam; an acquisition operation of performing a water-gas shift (WGS) on the reformed gas to acquire a mixed gas of hydrogen and carbon dioxide; a separation operation of separating hydrogen and carbon dioxide from the mixed gas; and a mixing operation of mixing separated carbon dioxide, sodium sulfate, ammonia, and water.

The methane reforming operation of converting a methane-containing gas into a reformed gas containing hydrogen, CO, and CO₂ by a reforming reaction using steam may be performed by producing the reformed gas containing the hydrogen and the carbon monoxide (CO) through a reforming reactor using the steam.

The methane-containing gas that may be used in the present disclosure may be methane gas or natural gas having 70% or more of methane by volume, and when using the natural gas, an operation of removing sulfur components contained in the natural gas may be performed, prior to the methane reforming operation.

The operation of removing sulfur components may be performed by a catalytic removal method in which exhaust gas is heated and removed using a metal oxide such as ZnO, CuO, MoO, or the like, an exhaust gas absorption method in which SO₂ is absorbed into water to generate H₂SO₄, a lime method in which Ca²⁺ of limestone (CaCO₃) reacts with SO₂ to generate CaSO₄, a Trona method in which baking soda (NaHCO₃) is added to generate sodium hydroxide, or the like, but a method of removing sulfur is not particularly limited.

The reformed gas may be subjected to water-gas shift (WGS) to obtain the mixed gas of the hydrogen and the carbon dioxide. The water-gas shift may be a process in which the carbon monoxide is reacted with the steam to generate the hydrogen, and a reaction formula thereof may be as follows.

<Reaction formula> CO + H₂O ↔ CO₂ + H₂

When high-purity hydrogen is required, a purification process such as a pressure swing adsorption (PSA) process may be performed, and further, a moisture removal process may be added to gas that has undergone the water-gas shift reaction using an adsorbent or the like.

Hydrogen may be acquired by separating hydrogen from the mixed gas of hydrogen and carbon dioxide, acquired through this process. In this case, the separation of hydrogen and carbon dioxide may be performed, for example, by a pressure swing adsorption (PSA) process selectively introducing an adsorbent that reacts with CO₂ or H₂ and produces high-purity hydrogen through a change in operating pressure, a membrane separation process separating hydrogen from a mixed gas by utilizing a difference in permeation rate according to sizes of gas molecules, and an amine wet process that separates hydrogen from a mixed gas by introducing an amine that selectively interacts with CO₂ into a reactor, or the like.

Since carbon dioxide should be utilized to be recognized as clean hydrogen, in the present disclosure, sodium sulfate may be used together with carbon dioxide acquired in this manner to produce baking soda.

In more detail, the operation of mixing the separated carbon dioxide from the mixed gas, with sodium sulfate, ammonia, and water may be included to produce the baking soda.

To this end, according to the present disclosure, the operation of mixing the separated carbon dioxide, with sodium sulfate, ammonia, and water may be performed, and the operation of mixing may be performed including mixing carbon dioxide in a countercurrent manner into a mixed solution acquired by mixing a sodium sulfate solution and an aqueous ammonia solution.

The sodium sulfate solution may be a solution acquired by solid-liquid separation of a sodium sulfate-containing material having a sodium sulfate content of 50 wt% or more.

The present disclosure may provide, in producing baking soda by reacting the carbon dioxide and the sodium sulfate-containing material (waste) during this operation, a method of removing undissolved impurities to increase purity of produced baking soda, and efficiently mixing ammonia to dissolve carbon dioxide and produce the baking soda even in a high pH state of the solution due to characteristics of the waste.

In more detail, the operation of mixing may be performed by including mixing a sodium sulfate solution and an aqueous ammonia solution and mixing the carbon dioxide into the mixed solution in a countercurrent manner.

In this case, the sodium sulfate solution may be acquired by dissolving a sodium sulfate-containing material, for example, a sodium sulfate-containing material such as a desulfurization by-product, in an eluting agent, and may be acquired by using a material having a sodium sulfate content of 50% or more. For example, the sodium sulfate-containing waste may be generated by desulfurizing exhaust gas containing sulfur oxide (SOₓ) components with baking soda, and may also be waste generated as a by-product in a lithium production plant. For example, it may be generated by desulfurizing exhaust gas generated by combustion in a thermal power plant, a factory, an incinerator, or the like, or exhaust gas generated by electric precipitation in a steel mill sintering plant using baking soda. The waste containing the sodium sulfate may include a heavy metal component such as lead (Pb), zinc (Zn), or the like that may be dissolved, and may include a large amount of an alkaline component such as sodium (Na), potassium (K), calcium (Ca), or the like, and may also have characteristic of a large amount of a chlorine (Cl) component. Most of the baking soda used as a desulfurization agent may react with Sox, and may be converted into a sodium sulfate component, and some insoluble gangue components contained in the exhaust gas may be also included. Specifically, main crystal phases constituting the desulfurization waste may be sodium sulfate, sodium chloride, potassium chloride, sodium carbonate, calcium sulfate, calcium carbonate, or the like, and may include iron oxide. Among the main crystal phases of the desulfurization dust solution, sodium sulfate, sodium chloride, potassium chloride, or the like may be components that may be highly soluble in water, and may be thus dissolved in water to produce an alkaline desulfurization dust solution.

In this manner, the sodium sulfate-containing material of the present disclosure may be a desulfurization by-product.

The eluting agent is not particularly limited as long as it is a material that may elute sodium ions when meeting a sodium sulfate-containing material, but may be at least one selected from water and an aqueous ammonia solution, and may be water, for example.

More specifically, in this case, to recover sodium sulfate from a sodium sulfate-containing waste in a form of a sodium sulfate solution containing sodium ions, a ratio of the sodium sulfate-containing waste and a ratio of the eluting agent may be important, and when the ratio of the eluting agent is too low, the sodium sulfate waste may not be completely dissolved, resulting in a large amount of residue, which reduces a recovery rate of sodium.

The ratio of the eluting agent that does not lose sodium sulfate as a residue may be 1.2 parts by weight or more of the eluting agent per 1 part by weight of the sodium sulfate waste. Preferably, 1.4 to 3, for example, 2 to 3, parts by weight of the eluting agent may be mixed per 1 part by weight of the sodium sulfate waste, and when the eluting agent may be included in an excessive amount exceeding this range, even when carbon dioxide is dissolved in the sodiumcontaining solution thereafter, the baking soda may not be precipitated as baking soda, and therefore, an amount of baking soda flowing out in a dissolved state in the solution may increase, thereby lowering a recovery rate of the baking soda.

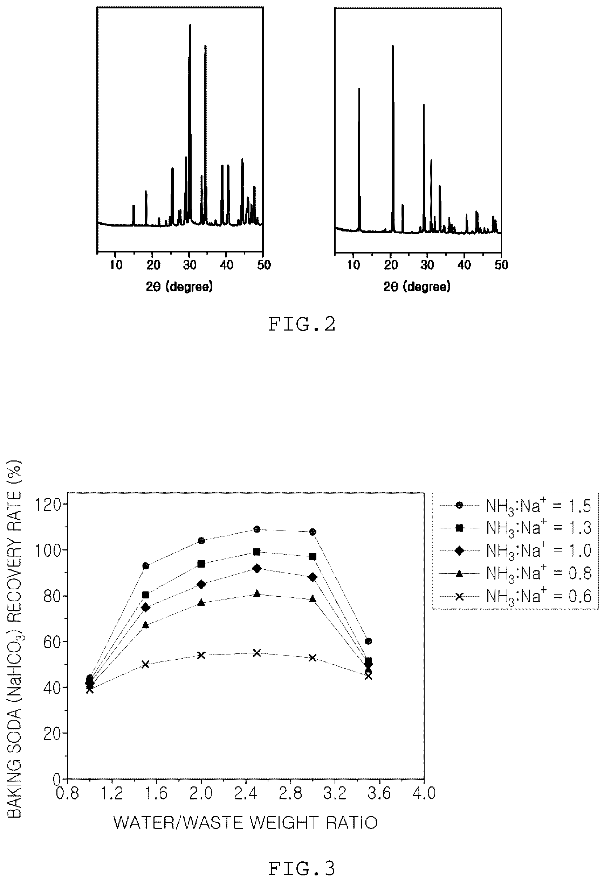

Referring to FIG. 3, a recovery rate of baking soda may be adjusted by adjusting a mass ratio between the sodium sulfate-containing material and water, an eluting agent. In order for the recovery rate of baking soda to be 50% or more (based on Na⁺ mole), a mass ratio between the sodium sulfate-containing material and the eluting agent may be 1:1.4 to 1:3. When a mass ratio of the eluting agent to the sodium sulfate-containing material is less than this range, sodium sulfate may not be dissolved, and may thus be lost as a residue, which may tend to decrease a recovery rate of sodium ions. When the mass ratio of the eluting agent to the sodium sulfate-containing material exceeds 3, a recovery rate of sodium ions may increase, but a concentration of sodium ions may be low, so a reaction may not proceed, and there may be a problem in that amounts of sodium ions flowing out into a waste liquid increase to decrease a production amount of baking soda.

When applying the sodium sulfate solution acquired by a ratio of a sodium sulfate-containing waste and a ratio of the eluting agent to a method for producing baking soda of the present disclosure, sodium in the sodium sulfate-containing waste may be recovered as 60% or more of baking soda.

Since a pH range in which bicarbonate ions are most generated is pH 7 to 10, for example, 7.5 to 9, and more preferably, pH 8 to 9, it is desirable to maintain a pH of between 8 and 9, to increase efficiency of baking soda production. In addition, when a pH exceeds 10, basic ammonia may not be sufficiently dissolved, and when a pH is lowered, hydrogen carbonate ions (HCO₃⁻) may be converted to carbonic acid (H₂CO₃), which may decrease a production rate of baking soda.

Carbon dioxide is an acidic gas, and may be dissolved well in a sodium sulfate solution, but when baking soda is produced using only carbon dioxide and sodium sulfate solution, a pH will continuously decrease, which will lower yield of production of baking soda. Therefore, in the present disclosure, the yield of baking soda may be improved by mixing ammonia, which may act as a pH buffer, with sodium sulfate, for example, by mixing ammonia with a sodium sulfate solution as an aqueous ammonia solution.

In general, to dissolve ammonia in a solution such as water or the like, gaseous ammonia may be aerated in an aqueous solution. However, there may be characteristics that, when ammonia is aerated in an aqueous solution, a pH may increase further, and in the aqueous solution in a basic state, the ammonia exists in an NH₃ state instead of an NH₄⁺ state, to be easily dissociated out of water. Therefore, in general, to produce a high-concentration ammonia water, pressure of a device dissolving ammonia gas may be operated on a high level, or a reaction surface area may increase to dissolve ammonia in a solution.

To recover 50 mol% of baking soda based on an Na⁺ molar concentration, the sodium sulfate solution and the aqueous ammonia solution may be mixed such that an ammonia (NH₃)/sodium (Na⁺) molar ratio may be 0.8 to 1.5, preferably more than 0.6 and 1.3 or less, for example, 0.7 or more and 1.2 or less. A reason why ammonia is essential in the process of producing baking soda by injecting carbon dioxide from waste containing sodium sulfate can also be understood from thermodynamic information below. When the ammonia (NH₃)/sodium (Na⁺) molar ratio is less than 0.8, a recovery rate of baking soda may decrease, and when the molar ratio increases, a recovery rate of baking soda may increase, but purity of baking soda may decrease.

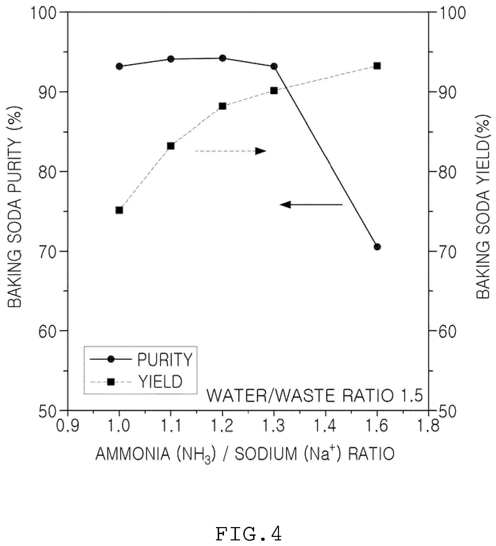

Referring to FIGS. 3 and 4, when a ratio of ammonia (NH₃)/sodium (Na⁺) is 0.6 or less, yield of baking soda may decrease because it may be lower than an optimized pH range for producing baking soda, and when a pH is 1.5 or higher, the yield may be high, but a large amount of impurities such as (NH₄)₂SO₄ or the like may be produced to decrease purity of baking soda. A preferred ratio of ammonia (NH₃)/sodium (Na⁺) is 1.25 to 1.35.

A reaction for producing baking soda may be as follows.

A baking soda production reaction using sodium sulfate (Reaction A):

Na₂SO₄ + 2CO₂ + 2H₂O → NaHCO₃ + H₂SO₄

A baking soda production reaction using sodium sulfate and ammonia (Reaction B):

Na₂SO₄ + 2NH₃ + 2CO₂ + 2H₂O → 2NaHCO₃ + (NH₄)₂SO₄

A free energy of Reaction A (△G, 298 K) may be 160.653 kJ/mol, and a free energy of Reaction B (△G, 298 K) may be 42.702 kJ/mol.

In this manner, Reaction A using only sodium sulfate and carbon dioxide has a positive value, and, thus, may not be a spontaneous reaction, and when ammonia is added, it has a negative value, confirming that it is a spontaneous reaction. Therefore, it can be confirmed that ammonia, which acts as a pH buffer, is necessary when producing bicarbonate using sodium sulfate.

An operation of acquiring a mixed solution by mixing the sodium sulfate solution and the aqueous ammonia solution may be performed at a temperature of 25°C or higher and less than 100°C, and when the temperature range is exceeded, solubility of sodium sulfate tends to decrease, which may lower yield.

The ammonia that may be used in the present disclosure may be ammonia, or a mixed solution, mixed gas, or solid containing the ammonia, and may be, for example, an aqueous ammonia solution.

Furthermore, to produce baking soda, carbon dioxide should be dissolved in an elution solution containing sodium ions. Therefore, subsequent to the operation of acquiring a mixed solution by mixing the sodium sulfate solution and the aqueous ammonia solution, the present disclosure may perform a mixing operation of mixing a gas containing carbon dioxide in a countercurrent manner with the mixed solution.

According to the present disclosure, when mixing in a countercurrent manner, a contact area between the sodium sulfate solution and carbon dioxide may be maximized, thereby increasing dissolution of carbon dioxide, and thus baking soda may be efficiently produced. In this case, when carbon dioxide is injected into an ammonia-containing solution, baking soda may be generated by a reaction between sodium ions and bicarbonate ions (HCO₃⁻) generated by the carbon dioxide in the solution.

The carbon dioxide used in this case may be pure carbon dioxide, or a nitrogen mixture gas containing 10 to 30 volume% of carbon dioxide, and for example, may be at least one selected from the group consisting of a FINEX off gas (FOG), a FINEX tail gas (FTG), a blast furnace gas (BFG), a electric converter gas, a coal-fired power plant exhaust gas, a gas power plant exhaust gas, an incinerator exhaust gas, a glass melting exhaust gas, a thermal facility exhaust gas, a petrochemical process exhaust gas, a petrochemical process gas, a pre-combustion exhaust gas, and a gasifier exhaust gas. In addition, carbon dioxide may be concentrated and used by using a wet amine method, a membrane method, a dry pressure swing adsorption/desorption method, or the like to increase a concentration of carbon dioxide.

In a baking soda production reactor in which a carbonation reaction occurs, a reaction pressure may be 1 to 10 atm, and a reaction temperature may be 50°C or lower. When a pressure of the carbonation reactor exceeds 10 atm, a sufficient amount of carbon dioxide may be dissolved, but energy required for the carbonation reactor may be high, which reduces economic feasibility of baking soda, which may be a final product. A period in time of the carbonation reaction may be changed depending on a method of injecting carbon dioxide. When carbon dioxide is injected as a gas, the period of time may be changed depending on whether or not aeration is performed, and when aeration is performed, the period of time may take 4 hours or less. However, an optimized pressure and reaction time may be changed depending on size/space/conditions of the reactor.

When carbon dioxide is dissolved in a (aqueous) solution, the carbon dioxide may exist in a state of carbonic acid (H₂CO₃), bicarbonate ions (HCO₃⁻), or carbonate ions (CO₃²⁻) depending on pH, and since a chemical formula of baking soda is NaHCO₃, amounts of bicarbonate ions in a solution should be large such that bonds with sodium ions increases and production of baking soda increases, and baking soda may be precipitated as a solid due to low solubility thereof.

The sodium sulfate solution of the present disclosure may be a solution acquired by separating a liquid sodium sulfate-containing material having a sodium sulfate content of 30 wt% or more by solid-liquid separation, that is, separating a solid and a liquid. In this case, a solid-liquid separation device is not particularly limited, and any device capable of separating a solid phase and a liquid phase may be used.

A filtrate acquired after the carbonation reaction may include large amounts of sulfate ions (SO₄²⁻). Therefore, a calcium-containing material may be added to the filtrate to manufacture gypsum (CaSO₄). In this case, the calcium-containing material may be at least one selected from the group consisting of a waste cement, a waste concrete, coal ashes, fly ashes, an iron ore slag, low-grade or high-grade quicklime (CaO), calcium chloride (CaCl₂), a wollastonite, a limestone, an olivine, a serpentine, an asbestos, and deinking ashes. Furthermore, when purity of the gypsum is low, the purity of the gypsum may be increased by recovering ammonia and adding sulfuric acid and gypsum to a remaining filtrate.

An aqueous ammonia solution injected into a mixing reactor in which the aqueous ammonia solution and a sodium sulfate solution are mixed to obtain a mixed solution may be preferably injected at a flow rate of 2.5 to 5 L/min. When a flow rate is less than the range, a residence time of the solution may be too long, causing stagnation of the solution, making it difficult to obtain a sufficient reaction surface area. When it exceeds this range, the residence time of the solution may be too short, causing a problem in which sufficient reaction does not occur.

The carbon dioxide-containing gas may be preferably injected at a flow rate of 2.5 to 5 L/min. When the flow rate is less than the range, there may be a problem that an outlet pressure may be low and the gas may not be smoothly transferred to an end of the reactor. When the flow rate exceeds the range, a residence period in time of the gas may be too short and a reaction thereof may not occur sufficiently.

Hereinafter, the present disclosure will be described in more detail through specific examples. The following examples may be merely examples to help understand the present disclosure, and the scope of the present disclosure is not limited thereto.

### Mode for Invention

### Example

### 1. Production of Hydrogen

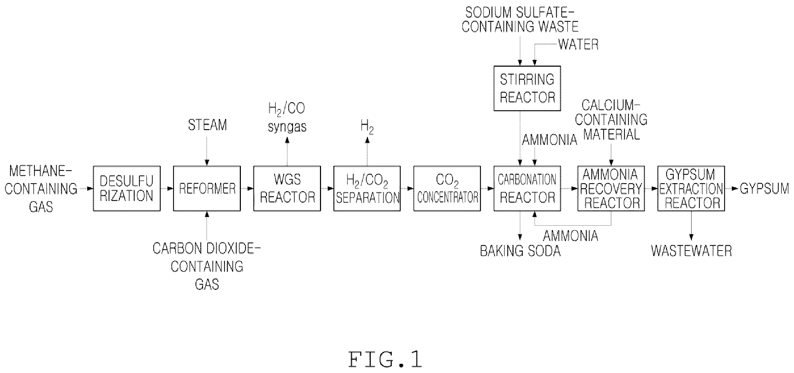

As an embodiment of the present disclosure, a hydrogen production experiment was performed according to a process diagram of FIG. 1. A composition of a methane-containing gas used in this case was illustrated in Table 1 below, and XRD analysis results of baking soda, which was finally produced, are illustrated in FIG. 2. In addition, FIG. 3 illustrates results of baking soda produced by utilizing carbon dioxide remaining after separating hydrogen from a mixed gas generated through methane reforming. It can be seen that, during synthesis of the baking soda, a recovery rate of baking soda produced is changed, depending on a molar ratio of Na⁺ extracted from ammonia and a sodium sulfate-containing waste, and a ratio of the sodium sulfate-containing waste and a ratio of water.

**[Table 1]**

| Composition of Methane-containing Gas | | | | |
|---|---|---|---|---|
| Composition | Methane (CH₄) | Ethane (C₂H₆) | Propane (C₃H₈) | Butane (C₄H₁₀) |
| Components (vol%) | 90.09 | 6.0 | 2.5 | 1.1 |
| Composition | Carbon Dioxide (CO₂) | Nitrogen (N₂) | Oxygen (O₂) | Sulfur |
| Components (vol%) | 0.1 | 0.2 | 0 ~ 2 | 0.01 |

First, the methane gas was heated to about 320°C through a pre-heater, and then a desulfurization process was performed. A desulfurization reactor was filled with a catalyst such as ZnO, CuO, MoO, or the like, and unsaturated hydrocarbons became hydrogen compounds and unreacted sulfur components became hydrogen compounds of hydrogen sulfide, and were absorbed. Desulfurized methane gas was mixed with steam to increase a temperature to 520°C, and then passed through an inner space of the reformer. In this case, the following reaction basically occurs:

C*ₙ*H*ₘ* + *n*H₂O → (*n + m*/2)H₂ + *n*CO (endothermic reaction, ΔH= 206 kJ/mol)

CO + H₂O → CO₂ + H₂ (exothermic reaction, ΔH= -41 kJ/mol)

Total heat balance was an endothermic reaction, and passed through the reformer at a temperature of about 830°C. Reformed gas passed through a water-gas shift (WGS) reactor. Changes in gas composition before and after passing through the WGS reactor are illustrated in Table 2. CO reacts with steam in the reformed gas to produce hydrogen and CO₂.

CO + H₂O = CO₂ + H₂

The reaction was an exothermic reaction, and a converted gas temperature was about 420°C.

**[Table 2]**

| Changes in Gas Composition before/after passing through WGS Reactor | | |
|---|---|---|
| Composition | Before WGS Reaction | After WGS Reaction |
| H₂ | 49% | 55% |
| CO | 9% | 3% |
| CO₂ | 5% | 12% |
| CH₄ | 3% | 3% |
| H₂O | 34% | 27% |

In order to separate hydrogen and carbon dioxide from a produced mixed gas, the produced mixed gas passed through a pressure cycle process (PSA). The pressure cycle process proceeded through an adsorption process - a regeneration process - a discharge process - a pressurization process, and high-purity hydrogen (99.999%) was produced. The separated carbon dioxide was also concentrated to over 90% through the pressure cycle process. In order for the produced hydrogen to be recognized as clean hydrogen, since carbon dioxide should be utilized, in the present disclosure, sodium sulfate was used, together with carbon dioxide acquired in this manner, to produce baking soda.

The sodium sulfate-containing waste used in this example used a desulfurization by-product having a composition illustrated in Table 3 below.

**[Table 3]**

| Composition of Sodium Sulfate-containing Waste, Desulfurization By-product | | | | | | | |
|---|---|---|---|---|---|---|---|
| Composition | Na₂O | K₂O | CaO | Fe₂O₃ | Pb | SO₃ | Cl |
| Components (wt%) | 46.5 | 2.93 | 2.02 | 4.2 | 0.134 | 34.4 | 6.97 |

A sodium sulfate-containing waste, which was a desulfurization by-product, included inorganic materials as illustrated in Table 3 above, to exhibit a characteristic of a pH of 9 or higher when dissolved in water. Ammonia, water, and sodium sulfate were mixed in a carbonation reactor, such as that illustrated in FIG. 1, and carbon dioxide was additionally mixed therein. The ammonia, the water, and the sodium sulfate were introduced separately or in a mixed state.

A filtrate from a carbonation reaction in the carbonation reactor included a large amount of sulfate ions (SO₄²⁻). Therefore, a calcium-containing material was added to the filtrate to manufacture gypsum (CaSO₄).

Since ammonia has a high unit price, it is desirable to recover the ammonia for economical process operation. A filtrate from the carbonation reactor has a pH of between 7 and 8, and most ammonia exists in a form of ammonium ions (NH₄⁺). To recover this, the pH should be increased to 10 or more, and ammonia should be recovered in a form of gas or in a form of steam using steam. Therefore, quicklime (CaO), a calcium-containing material, was introduced to increase the pH. In addition to the quicklime, slaked lime, which may increase the pH, or the like may be used. More than 90% of the ammonia in the solution may be recovered, and the recovered ammonia may be reused in the carbonation reactor.

When ammonia was recovered, ions remaining in the solution were calcium (Ca²⁺) and sulfate (SO₄²⁻). When the pH was 6 or higher, since carbonate (CO₃²⁻) ions remaining in the solution reacted to produce lime (CaCO₃) and slaked lime (Ca(OH)₂) as impurities, a pH needed to be reduced to 6 or lower. To reduce the pH, acid should be added, such as sulfuric acid (H₂SO₄), hydrochloric acid (HCl), or the like. Wastewater from a gypsum extraction reactor was treated through a wastewater treatment process.

### 2. Yield and Purity of Sodium Bicarbonate according to Water:Waste Ratio and Ammonia (NH₃) :Sodium (Na⁺) Ratio

To confirm yield and purity of baking soda according to a water (eluent): waste (desulfurization by-product) ratio when acquiring a sodium sulfate solution by solid-liquid separation from the desulfurization by-product containing sodium sulfate by the eluent, the water: waste ratio was prepared as 1.0, 1.5, 2.0, 2.5, 3.0, and 3.5 and stirred in a first reactor.

After each of eluent solutions in which the stirring ended were stirred in a second reactor in a state in which an ammonia (NH₃)/sodium (Na⁺) ratio was 0.6, 0.8, 1.0, 1.3, and 1.5, and then carbon dioxide was added in a third reactor to start a reaction.

As can be seen in FIGS. 3 and 4, it can be confirmed that, when a water/waste ratio is too low, since waste may not be dissolved to decrease an amount of a eluent solution, which lowers a recovery rate of baking soda, and when an amount of water is too high, a concentration of Na⁺ in the solution may be low, which lowers a recovery rate of baking soda. In addition, when an ammonia (NH₃)/sodium (Na⁺) ratio is 0.6 or lower, a pH may be low, which lowers a recovery rate of baking soda. When an ammonia (NH₃)/sodium (Na⁺) ratio is 1.5 or higher, yield of baking soda may increase, but impurities such as (NH₄)₂SO₄ may be generated, which lowers purity of baking soda.

Although the embodiments of the present disclosure have been described in detail above, the scope of the present disclosure may not be limited thereto, and it will be apparent to those skilled in the art that various modifications and variations may be possible within the scope that does not depart from the technical idea of the present disclosure described in the claims.

## Claims

1. A method for producing clean hydrogen, comprising:
a methane reforming operation of converting a methane-containing gas into a reformed gas containing hydrogen, carbon monoxide (CO), and carbon dioxide (CO₂) by a reforming reaction using steam;
an acquisition operation of performing a water-gas shift (WGS) on the reformed gas to acquire a mixed gas of hydrogen and carbon dioxide;
a separation operation of separating hydrogen and carbon dioxide from the mixed gas; and
a mixing operation of mixing separated carbon dioxide, sodium sulfate, ammonia, and water.

2. The method of claim 1, wherein the mixing operation includes mixing carbon dioxide in a countercurrent manner into a mixed solution acquired by mixing a sodium sulfate solution and an aqueous ammonia solution.

3. The method of claim 2, wherein the sodium sulfate solution is acquired by solid-liquid separation of a sodium sulfate-containing material having a sodium sulfate content of 30 wt% or more.

4. The method of claim 2, wherein the sodium sulfate solution is acquired by solid-liquid separation from a sodium sulfate-containing material using an eluting agent.

5. The method of claim 4, wherein a mass ratio of the sodium sulfate-containing material and the eluting agent is 1:1.2 to 1:3.

6. The method of claim 2, wherein the sodium sulfate solution and the ammonia are mixed such that a ratio of ammonia (NH₃)/sodium (Na⁺) is 0.8 to 1.5.

7. The method of claim 2, wherein the mixing operation is performed under conditions of a temperature of 25°C or higher and less than 100°C and a pH of 7 to 10.

8. The method of claim 2, wherein the ammonia is a mixed solution, mixed gas, or solid, containing ammonia.

9. The method of claim 1, further comprising an operation of removing sulfur, an impurity, from the methane-containing gas, prior to the methane reforming operation.
